# EUROPÄISCHE PATENTSCHRIFT

(11) **EP 3 066 420 B1**
(45) Veröffentlichungstag und Bekanntmachung des Hinweises auf die Patenterteilung: **20.02.2019**
(21) Anmeldenummer: 14801967.2
(22) Anmeldetag: 11.11.2014
(51) Int. Cl.: G01C 21/20

(54) **VORRICHTUNG ZUR UNTERSTÜTZUNG VON PERSONEN MIT EINGESCHRÄNKTER MOBILITÄT**
DEVICE FOR SUPPORTING PERSONS HAVING LIMITED MOBILITY
DISPOSITIF SERVANT À ASSISTER DES PERSONNES À MOBILITÉ RÉDUITE

(30) Priorität: 06.03.2014 DE 102014204100
(43) Veröffentlichungstag der Anmeldung: 14.09.2016
(73) Patentinhaber: Siemens Aktiengesellschaft, 80333 München (DE)
(72) Erfinder: DEVEAUD, Marion, 81539 München (DE)
(86) Internationale Anmeldenummer: PCT/EP2014/074247
(87) Internationale Veröffentlichungsnummer: WO 2015/131963

(56) Entgegenhaltungen:
- DE-A1-102008 034 180
- US-A1- 2011 238 291
- US-A1- 2012 173 137
- US-A1- 2013 205 257

## Beschreibung

Die Erfindung betrifft eine Vorrichtung zur Unterstützung von Personen mit eingeschränkter Mobilität, bspw. Rollstuhlfahrer, bei der eine optimale Route durch städtische Infrastrukturen, z. B. Bahnhöfe, U- und S-Bahnhöfe und Flughäfen, für Personen mit eingeschränkter Mobilität unter Einbeziehung der Verfügbarkeit der notwendigen Fahrhilfen, z. B. Fahrstühle, Rolltreppen und Fahrrampen, ermittelt wird.

Die optimale Route hängt neben der Konfiguration der städtischen Infrastrukturen stark von der Verfügbarkeit der notwendigen Fahrhilfen ab. Die Konfiguration der städtischen Infrastrukturen bzw. die prinzipiell möglichen Wege ändern sich permanent. Hinzu kommen temporäre Ausfälle von Fahrhilfen und Baustellen auf den betroffenen Wegen. Dies alles führt dazu, dass sich für die betroffene Person aktuell immer wieder andere optimale Routen ergeben.

Die bisher etablierten Vorrichtungen dieser Art, bspw. entsprechende datenbankbasierte Navigationssysteme, haben den Nachteil, dass das Auffinden optimaler Routen unter diesen genannten Umstände nicht oder nur sehr unzureichend möglich ist.

Aus der deutschen Patentschrift DE 10 2008 034 180 B4 (CLAUSEN BJOERN; ZENTNER ADRIAN)ist ein Wegeleitsystem zur Verortung und Wegfindung von Fußgängern in einem abgeschlossenen Bereich bekannt, mit einem Datenbankmittel, das räumliche Informationen bezüglich des abgeschlossenen Bereichs enthält, die eine dreidimensionale Darstellung zumindest eines Teilbereichs des abgeschlossenen Bereichs in Echtzeit erlauben, mit einem Zieleingabemittel, das angepaßt ist, zumindest einen in dem abgeschlossenen Bereich angeordneten Zielpunkt festzulegen, mit einem Wegbestimmungsmittel, das angepaßt ist, einen Weg innerhalb des abgeschlossenen Bereichs zwischen einem Startpunkt und dem Zielpunkt zu bestimmen, mit einem Visualisierungsmittel, das angepaßt ist, aus den räumlichen Informationen und dem bestimmten Weg in Echtzeit eine dreidimensionale Darstellung zu erstellen, und mit einem Darstellungsmittel, das angepaßt ist, die dreidimensionale Darstellung wiederzugeben.

Aus der amerikanischen Patentanmeldung US 2013/205257 A1 (ALBRIGHT JAMES R) ist ein System bekannt, das Gebäudeinformationen, insbesondere für Nutzer mit einer Behinderung, für ein jeweiliges Gebäude in dem sich der Nutzer gerade befindet zu Verfügung stellt bzw. anzeigt, wobei der Benutzer der Vorrichtung über eine Kommunikationseinheit einem Cloud-Speicher einen Fahrhilfezustand melden kann, so dass diese Information auch anderen Nutzern zur Verfügung gestellt werden kann.

Aus der amerikanischen Patentanmeldung US 2012/173137 A1 (COMPTON DAVID ET AL) ist ein Verfahren zu Finden von optimalen Routen bekannt, bei dem körperliche Grenzen eines Benutzers, verbotene Bereiche und Hindernisse berücksichtigt werden können, wobei die körperlichen Grenzen des Benutzers permanent aber auch zeitlich begrenzt sein können. Ferner ist hieraus bekannt, dass der Routenbeginn regelmäßig derart aktualisierbar ist, dass er jeweils weitgehend dem aktuellen Standort der Vorrichtung entspricht.

Aus der amerikanischen Patentanmeldung US 2011/238291 A1 (BACH JEFFREY) ist eine Vorrichtung bekannt, mit der in Abhängigkeit der Art der Mobilitätseinschränkung einer jeweiligen Person Daten gesammelt und einer geografischen Datenbank und/oder Navigationssystem zur Verfügung gestellt werden. Ferner ist hieraus bekannt, dass solche Vorrichtungen körperlich fest mit einem Rollstuhl verbunden sein können.

Die der Erfindung zu Grunde liegende Aufgabe besteht nun darin, eine Vorrichtung zur Unterstützung von Personen mit eingeschränkter Mobilität anzugeben, bei der die oben genannten Nachteile in möglichst einfacher, kostengünstiger und zuverlässiger Weise vermieden werden.

Diese Aufgabe wird durch die Merkmale des Patentanspruchs 1 erfindungsgemäß gelöst. Die weiteren Ansprüche betreffen bevorzugte Ausgestaltungen der Erfindung.

Die Erfindung betrifft im Wesentlichen eine Vorrichtung zur Unterstützung von Personen mit eingeschränkter Mobilität, wobei die Vorrichtung ein mobiles Endgerät oder ein fest in einer Fortbewegungshilfe der Person mit eingeschränkter Mobilität integriertes Navigationssystem ist, bei der eine Abfrageeinheit zur Abfrage von aktuellen Fahrhilfezustands-Informationen in der Vorrichtung vorhanden und dazu eingerichtet ist, wobei diese Fahrhilfezustands-Informationen von nahegelegenen Fahrhilfen selbst und/oder anderen empfangbaren Vorrichtungen, also solchen, die sich aktuell in der Nähe der jeweiligen Person innerhalb des Empfangsradius befinden, zur Unterstützung von Personen mit eingeschränkter Mobilität stammen, bei der eine Dateneinheit in der Vorrichtung vorhanden und dazu eingerichtet ist, dass die aktuellen Fahrhilfezustands-Informationen speicherbar und externe Streckeninformationen abrufbar und speicherbar sind, bei der eine Ein/Ausgabe-Einheit in der Vorrichtung vorhanden und dazu eingerichtet ist, dass mindestens ein Routenziel eingebbar und eine aktuelle optimale Route ausgebbar sind, und bei der eine Recheneinheit in der Vorrichtung vorhanden und dazu eingerichtet ist, dass mit Hilfe eines Routenbeginns, des Routenziels, der aktuellen Fahrhilfezustands-Informationen und der externen Streckeninformationen die aktuelle optimale Route ermittelbar ist. Durch die Aufnahme der aktuellen Fahrhilfezustands-Informationen wird die Route mit der notwendigen funktionierenden Infrastruktur quasi in Echtzeit optimal berechnet, wobei die häufig ohnehin vorhandenen Funktionen einer automatisierten Stadt- und Gebäudeinfrastruktur und Echtzeitdaten aus dem Internet, wie bspw. Fahrpläne, Wetter, Preise und Öffnungszeiten, nutzbar sind.

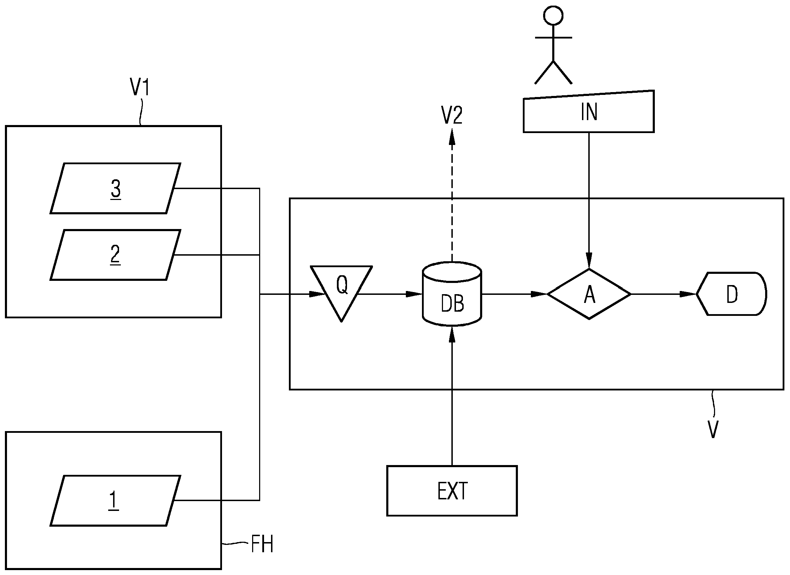

Nachfolgend wird die Erfindung anhand von in der Zeichnung dargestellten Ausführungsbeispielen näher erläutert.

Es ist eine erfindungsgemäße Vorrichtung V zur Unterstützung von Personen mit eingeschränkter Mobilität gezeigt, mit einer Abfrageeinheit Q, einer Dateneinheit DB, einer Recheneinheit A und einer Ein/Ausgabe-Einheit IN, D, wobei die Abfrageeinheit Q aktuelle Fahrhilfezustands-Informationen 1 von nahegelegenen Fahrhilfen FH selbst und aktuelle Fahrhilfezustands-Informationen 2, 3 von anderen empfangbaren erfindungsgemäßen Vorrichtungen V1 zur Unterstützung von Personen mit eingeschränkter Mobilität empfängt.

In der Dateneinheit DB sind aktuelle Fahrhilfezustands-Informationen 1, 2 oder 3 von FH bzw. V1 speicherbar und externe Streckeninformationen EXT abrufbar und speicherbar.

Mit Hilfe der Ein/Ausgabe-Einheit IN, D ist mindestens ein Routenziel eingebbar und eine aktuelle optimale Route ausgebbar. Dabei ist die Eingabe-Einheit IN bspw. eine Tastatur oder ein Touchpad und die Ausgabe-Einheit D bspw. ein Bildschirm.

Durch die Recheneinheit A ist mit Hilfe eines Routenbeginns, des eingegebenen Routenziels, der aktuellen Fahrhilfezustands-Informationen und der externen Streckeninformationen EXT die aktuelle optimale Route ermittelbar.

Die gespeicherten aktuellen Fahrhilfezustands-Informationen sind zyklisch anderen Vorrichtungen V2 zur Unterstützung von Personen mit eingeschränkter Mobilität per Funk, z. B. per WiFi®, anbietbar und übertragbar. Hierfür weist die Vorrichtung V eine entsprechende Kommunikationseinheit auf. Bspw. kann die Abfrageeinheit Q die Funktion einer solchen Kommunikationseinheit erfüllen, d.h. die Abfrageeinheit Q weist einen Sender auf, mit dem die gespeicherten aktuellen Fahrhilfezustands-Informationen per Funk übertragen werden können.

Die Fahrhilfezustands-Informationen umfassen eine eindeutige Fahrhilfe-Identifikation und einen aktuellen Betriebszustand der Fahrhilfe FH. Der Betriebszustand umfasst bspw. eine Aktiv/Nichtaktiv-Information, wobei die Aktiv/Nichtaktiv-Information optional Zeitraum-Angaben, also bspw. "in Betrieb von ... bis ..." für die Aktivität/Nichtaktivität enthält, und/oder eine Position der Fahrhilfe.

Der Ist-Zustand von vorhandenen Fahrhilfen, also Aktiv/Nichtaktiv-Information, ist mit Hilfe von einfachen lokalen Überwachungseinheiten erfassbar und auch bei den meisten Störungen noch mitteilbar, da die Störungen in der Regel auf mechanische Probleme zurückzuführen sind bzw. die Stromversorgung oder die Informationsübertragung nicht betroffen ist.

Die externen Streckeninformationen EXT enthalten typischerweise aktuelle Informationen über Fahrpläne und/oder Öffnungszeiten und/oder Preise und/oder Wetterverhältnisse.

Die externen Streckeninformationen EXT sind optional von einem Web-Service empfangbar. So kann beispielsweise ein entsprechender Web-Service die Umgebungspläne von der städtischen Infrastruktur inklusive Typ, GPS-Koordinaten, eindeutiger Identifikationsnummer und üblicher Betriebsweise liefern.

Diese Umgebungspläne können optional mit zusätzlichen Informationen von Dritt-Anbietern, bspw. mit Fahrplänen, Preisen von öffentlichen Verkehrsdiensten, Öffnungszeiten, EintrittsPreise von städtischen Einrichtungen, Angebote, dem aktuellen Wetter, angereichert werden.

Personen mit eingeschränkter Mobilität, sind bspw. Rollstuhlfahrer, ältere Menschen, Blinde, Eltern mit Kinderwagen, Personen mit Epilepsien.

Die Vorrichtung kann als Einzelgerät ausgestaltet oder körperlich fest mit einem Rollstuhl o.ä. verbunden bzw. dessen Bestandteil sein. Bspw. kann die Vorrichtung optional in Form eines mobilen Endgerätes, beispielsweise einem Mobiltelefon oder Smartphone, oder in Form eines fest in einer Fortbewegungshilfe der Person mit eingeschränkter Mobilität, bspw. einem Rollstuhl, integrierten Navigationssystems ausgeführt sein.

Der Routenbeginn ist vorteilhafterweise regelmäßig derart aktualisierbar, dass er jeweils weitgehend dem aktuellen Standort der Vorrichtung entspricht.

Die optimale Route ist typischerweise dadurch ermittelbar, dass entweder die billigste Route, die schnellste Route, die sicherste Route oder die Route mit bestem InfrastrukturAngebot, z.B. Behinderten-Toilette auf dem Weg, suchbar ist, wobei diese Optimierungskriterien optional auch zur Auswahl stehen und individuell ausgewählt oder deaktiviert werden können.

Optional kann die optimale Route auch noch in Abhängigkeit der Art der Mobilitätseinschränkung bestimmbar sein. Daraufhin ermittelt es situationsbedingt und personenabhängig je nach Art des Handicaps die aktuell optimale Route.

Die Vorrichtung kann als Einzelgerät ausgestaltet oder körperlich fest mit einer Fahrhilfe, bspw. einem Rollstuhl, verbunden bzw. dessen Bestandteil sein.

## Patentansprüche

1. Vorrichtung zur Unterstützung von Personen mit eingeschränkter Mobilität,
- wobei die Vorrichtung ein mobiles Endgerät oder ein fest in einer Fortbewegungshilfe der Person mit eingeschränkter Mobilität integriertes Navigationssystem ist,
- bei der eine Abfrageeinheit (Q) zur Abfrage von aktuellen Fahrhilfezustands-Informationen (1, 2, 3) in der Vorrichtung vorhanden und dazu eingerichtet ist, wobei diese Fahrhilfezustands-Informationen aktuelle Betriebszustände sowie eindeutige Fahrhilfe-Identifikationen von Fahrhilfen (FH) angeben und wobei die Fahrhilfezustands-Informationen von nahegelegenen Fahrhilfen (FH) selbst und/oder anderen Vorrichtungen (V1) zur Unterstützung von Personen mit eingeschränkter Mobilität stammen,
- bei der eine Dateneinheit (DB) in der Vorrichtung vorhanden und dazu eingerichtet ist, dass die aktuellen Fahrhilfezustands-Informationen speicherbar sind,
- bei der eine Ein/Ausgabe-Einheit (IN, D) in der Vorrichtung vorhanden und dazu eingerichtet ist, dass mindestens ein Routenziel eingebbar und eine aktuelle optimale Route ausgebbar sind, und
- bei der eine Recheneinheit (A) in der Vorrichtung vorhanden und dazu eingerichtet ist, dass
mit Hilfe eines Routenbeginns, des Routenziels, der aktuellen Fahrhilfezustands-Informationen die aktuelle optimale Route ermittelbar ist.

2. Vorrichtung nach Anspruch 1,
bei der eine Kommunikationseinheit derart eingerichtet ist, dass gespeicherte aktuelle Fahrhilfezustands-Informationen zyklisch anderen Vorrichtungen (V2) zur Unterstützung von Personen mit eingeschränkter Mobilität per Funk anbietbar und übertragbar sind.

3. Vorrichtung nach Anspruch 1,
bei der die Fahrhilfezustands-Information eine eindeutige Fahrhilfe-Identifikation, eine Aktiv/Nichtaktiv-Information umfasst.

4. Vorrichtung nach Anspruch 3,
bei der die Aktiv/Nichtaktiv-Information Zeitraum-Angaben für die Aktivität/Nichtaktivität einer Fahrhilfe enthält.

5. Vorrichtung nach einem der vorhergehenden Ansprüche,
- bei der die Dateneinheit (DB) derart eingerichtet ist, dass auch externe Streckeninformationen (EXT) abrufbar und speicherbar sind, und
- bei der die Recheneinheit (A) derart eingerichtet ist, dass die aktuelle optimale Route zusätzlich mit Hilfe der externen Streckeninformationen (EXT) ermittelbar ist.

6. Vorrichtung nach Anspruch 5,
bei der die externen Streckeninformationen (EXT) aktuelle Informationen über Wetterverhältnisse enthält.

7. Vorrichtung nach Anspruch 5 oder 6,
bei der externen Streckeninformationen (EXT) von einem Web-Service empfangbar sind.

8. Vorrichtung nach Anspruch 7,
bei der die externen Streckeninformationen (EXT) aktuelle Informationen von Drittanbietern über Fahrpläne und/oder Preise von öffentlichen Verkehrsdiensten und/oder Öffnungszeiten und/oder Eintrittspreise von städtischen Einrichtungen und/oder Angebote und/oder das aktuelle Wetter enthalten.

9. Vorrichtung nach einem der vorhergehenden Ansprüche,
bei der die optimale Route dadurch ermittelbar ist, dass entweder die billigste Route, die schnellste Route, die sicherste Route oder die Route mit bestem Infrastrukturangebot bestimmt wird.

10. Vorrichtung nach Anspruch 9,
bei der die optimale Route in Abhängigkeit der Art der Mobilitätseinschränkung bestimmbar ist.

## Claims

1. Apparatus for assisting persons with restricted mobility,
- wherein the apparatus is a mobile terminal or a navigation system permanently integrated in a means of transportation for the person with restricted mobility,
- in which a query unit (Q) for querying current driving aid state information (1, 2, 3) is present in the apparatus and is set up for this purpose, wherein this driving aid state information indicates current operating states and unique driving aid identifications of driving aids (FH), and wherein the driving aid state information comes from nearby driving aids (FH) themselves and/or other apparatuses (V1) for assisting persons with restricted mobility,
- in which a data unit (DB) is present in the apparatus and is set up such that the current driving aid state information can be stored,
- in which an input/output unit (IN, D) is present in the apparatus and is set up such that at least one route destination can be input and a current optimum route can be output, and
- in which a computing unit (A) is present in the apparatus and is set up such that the current optimum route can be determined with the aid of a route beginning, the route destination and the current driving aid state information.

2. Apparatus according to Claim 1,
in which a communication unit is set up in such a manner that stored current driving aid state information can be cyclically offered and transmitted to other apparatuses (V2) for assisting persons with restricted mobility by means of radio.

3. Apparatus according to Claim 1,
in which the driving aid state information comprises a unique driving aid identification and an item of active/inactive information.

4. Apparatus according to Claim 3,
in which the active/inactive information item contains period specifications for the activity/inactivity of a driving aid.

5. Apparatus according to one of the preceding claims,
- in which the data unit (DB) is set up in such a manner that external route information (EXT) can also be retrieved and stored, and
- in which the computing unit (A) is set up in such a manner that the current optimum route can be additionally determined with the aid of the external route information (EXT).

6. Apparatus according to Claim 5,
in which the external route information (EXT) contains current information relating to weather conditions.

7. Apparatus according to Claim 5 or 6,
in which external route information (EXT) can be received from a web service.

8. Apparatus according to Claim 7,
in which the external route information (EXT) contains current information from third-party providers relating to timetables and/or prices of public transport services and/or opening times and/or entrance fees for municipal facilities and/or offers and/or the current weather.

9. Apparatus according to one of the preceding claims,
in which the optimum route can be determined by determining either the cheapest route, the fastest route, the safest route or the route offering the best infrastructure.

10. Apparatus according to Claim 9,
in which the optimum route can be determined on the basis of the type of mobility restriction.

## Revendications

1. Dispositif d'assistance aux personnes à mobilité réduite,
- le dispositif étant un terminal mobile ou un système de navigation intégré fixe dans un auxiliaire de déplacement de la personne à mobilité réduite,
- dans lequel une unité d'interrogation (Q) destinée à demander des informations actuelles d'état d'assistance à la conduite (1, 2, 3) est présente et est conçue pour ce faire au sein du dispositif, lesdites informations d'état d'assistance à la conduite fournissant des états de fonctionnement actuels ainsi que des identifications non équivoques concernant des assistances à la conduite (FH), et les informations d'état d'assistance à la conduite provenant des assistances à la conduite (FH) suggérées proprement dites et/ou d'autres dispositifs (V1) d'assistance aux personnes à mobilité réduite,
- dans lequel une unité de données (DB) est présente au sein du dispositif et est conçue pour que les informations actuelles d'état d'assistance à la conduite puissent être mises en mémoire,
- dans lequel une unité d'entrée-sortie (IN, D) est présente au sein du dispositif et est conçue pour qu'au moins une destination d'itinéraire puisse être entrée et pour qu'un itinéraire optimal actuel puisse être produit, et
- dans lequel une unité de calcul (A) est présente au sein du dispositif et est conçue pour que l'itinéraire optimal actuel puisse être déterminé à l'aide d'un début d'itinéraire, de la destination d'itinéraire, et/ou des informations actuelles d'état d'assistance à la conduite.

2. Dispositif selon la revendication 1,
dans lequel une unité de communication est conçue de telle manière que des informations actuelles d'état d'assistance à la conduite mises en mémoire peuvent être proposées et transmises par radio de manière cyclique à d'autres dispositifs (V2) d'assistance aux personnes à mobilité réduite.

3. Dispositif selon la revendication 1,
dans lequel l'information d'état d'assistance à la conduite comprend une identification non équivoque d'assistance à la conduite et une information d'activité/d'inactivité.

4. Dispositif selon la revendication 3,
dans lequel l'information d'activité/d'inactivité contient des données chronologiques concernant l'activité/l'inactivité d'une assistance à la conduite.

5. Dispositif selon l'une quelconque des revendications précédentes,
- dans lequel l'unité de données (DB) est conçue de telle manière que des informations de trajet externes (EXT) peuvent également être obtenues et mises en mémoire, et
- dans lequel l'unité de calcul (A) est conçue de telle manière que l'itinéraire optimal actuel peut être déterminé de manière supplémentaire à l'aide des informations de trajet externes (EXT).

6. Dispositif selon la revendication 5,
dans lequel les informations de trajet externes (EXT) contiennent des informations actuelles sur des conditions météorologiques.

7. Dispositif selon la revendication 5 ou 6,
dans lequel les informations de trajet externes (EXT) peuvent être reçues d'un service Web.

8. Dispositif selon la revendication 7,
dans lequel les informations de trajet externes (EXT) contiennent des informations actuelles en provenance de fournisseurs tiers et concernant des feuilles de route et/ou des tarifs de services routiers publics et/ou des horaires d'ouverture et/ou des tarifs d'entrée pour des équipements municipaux et/ou des offres et/ou le temps qu'il fait.

9. Dispositif selon l'une quelconque des revendications précédentes,
dans lequel l'itinéraire optimal peut être déterminé en décidant entre l'itinéraire le plus économique, l'itinéraire le plus rapide, l'itinéraire le plus sûr, ou l'itinéraire présentant la meilleure offre d'infrastructures.

10. Dispositif selon la revendication 9,
dans lequel l'itinéraire optimal peut être déterminé en fonction du type de réduction de mobilité.
